Europäisches Patentamt

European Patent Office

Office européen des brevets

(19)

(11) **EP 0 897 199 A1**

(12) **DEMANDE DE BREVET EUROPEEN**

(43) Date de publication:
**17.02.1999 Bulletin 1999/07**

(51) Int Cl.$^6$: **H01Q 3/46**, H04B 7/155

(21) Numéro de dépôt: **98401907.5**

(22) Date de dépôt: **27.07.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **31.07.1997 FR 9709786**

(71) Demandeur: **ALCATEL ALSTHOM COMPAGNIE GENERALE D'ELECTRICITE**
**75008 Paris (FR)**

(72) Inventeur: **Marchand, Philippe**
**75013 Paris (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Répeteur actif pour système de transmission**

(57) L'invention concerne des répéteurs actifs pour des systèmes de transmission utilisés en téléphonie mobile.

Le répéteur actif comprend une antenne (16) constituée d'une pluralité d'éléments radiants juxtaposés (12,14), qui sont groupés en deux réseaux matriciels identiques séparés (18,20), des voies d'amplification pour connecter chaque élément radiant d'un réseau à un élément radiant du deuxième réseau à la même position matricielle selon un déphasage et un gain identiques pour chaque voie d'amplification de sorte que l'onde reçue (40) par le premier réseau (18) suivant un angle d'incidence $\Theta$ est ré-émis par le deuxième réseau (20) suivant une onde (42) d'angle d'incidence $\beta$ tel que $\Theta = \beta$.

L'invention est applicable aux systèmes de téléphonie mobile.

FIG.1

## Description

L'invention concerne les systèmes de transmission de signaux radioélectriques et, plus particulièrement dans de tels systèmes, les répéteurs qui sont utilisés pour recevoir les signaux radioélectriques d'un émetteur et les retransmettre vers un récepteur.

Dans les systèmes de téléphonie mobile, par exemple ceux connus sous l'acronyme anglo-saxon GSM pour "Global System for Mobile", l'usager doit pouvoir être atteint quel que soit le lieu où il se tient et, notamment, dans un environnement urbain dense. A cet effet, les toits de certains immeubles sont équipés de stations d'émission/réception dites de base qui communiquent avec l'usager soit directement s'il se tient dans la zone de portée de l'antenne de la station de base, soit indirectement par l'intermédiaire d'antennes réflectrices actives ou répéteurs actifs qui, comme leur nom l'indique, réfléchissent les signaux radio émis par la station de base avoisinante et vice-versa pour le retour de l'usager vers la station de base.

Chaque antenne réflectrice est en fait constituée de deux antennes, l'une dont le diagramme de rayonnement est orienté vers la station de base et l'autre dont le diagramme de rayonnement est orienté vers l'usager, ces deux antennes étant connectées par deux voies d'amplification électrique, l'une pour le sens station vers usager et l'autre pour le sens usager vers station.

De telles couples d'antennes présentent l'inconvénient majeure de présenter un diagramme de rayonnement directif pour éviter le risque d'oscillation, ce qui limite le zone de couverture des usagers par une telle antenne et augmente le nombre d'antennes réflectrices à utiliser pour couvrir une zone donnée. Il en résulte une multiplication des antennes réflectrices sur les toits, ce qui conduit à un coût global plus élevé.

Le but de la présente invention est donc de réaliser un répéteur actif pour système de transmission qui présente un diagramme de rayonnement peu directif à la réception et à l'émission et qui utilise une antenne unique d'émission/réception.

L'invention concerne donc un répéteur actif pour système de transmission, caractérisé en ce qu'il comprend:

- une antenne constituée d'une pluralité d'éléments radiants juxtaposés, qui sont groupés en deux réseaux matriciels identiques séparés,
- des voies d'amplification pour connecter chaque élément radiant d'un réseau à un élément radiant du deuxième réseau à la même position matricielle selon un gain et un déphasage identiques pour chaque voie d'amplification de sorte que l'onde reçue par le premier réseau suivant un angle d'incidence $\Theta$ est ré-émis par le deuxième réseau suivant une onde d'angle d'incidence $\beta$ tel que $\Theta = \beta$.

Les deux éléments radiants qui sont connectés par une voie d'amplification sont éloignés l'un de l'autre d'une distance suffisante pour obtenir une isolation entre les deux éléments radiants qui est supérieure au gain de la voie d'amplification.

D'autres caractéristiques et avantages de la présente invention apparaîtront à la lecture de la description suivante d'un exemple particulier de réalisation, ladite description étant faite en relation avec les dessins joints dans lesquels:

- la figure 1 est un schéma montrant une vue de face de l'antenne d'un répéteur actif selon l'invention,
- la figure 2 est un schéma montrant les connexions entre les éléments radiants du répéteur actif selon l'invention, et
- la figure 3 est un schéma simplifié d'un élément radiant qui peut être utilisé pour mettre en oeuvre l'invention.

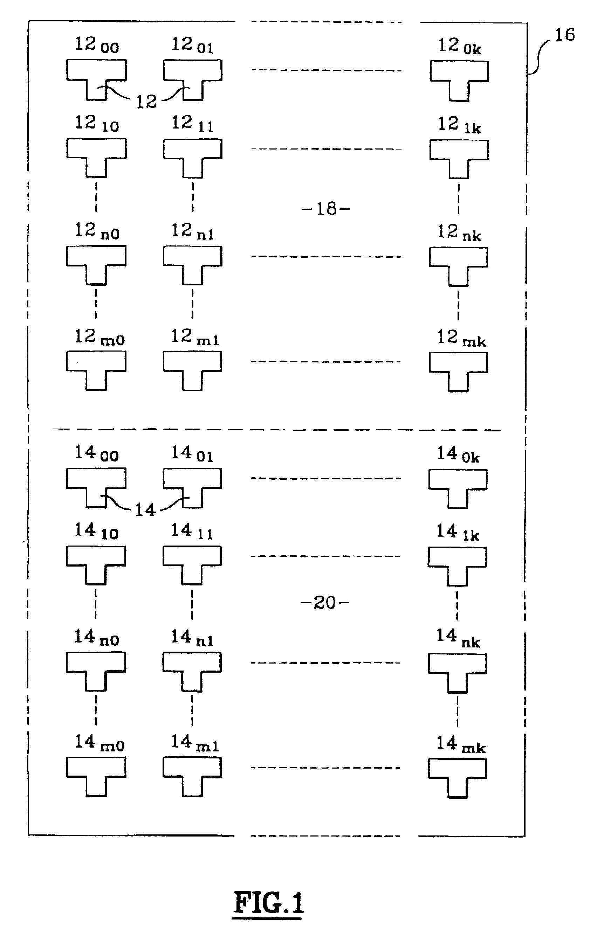

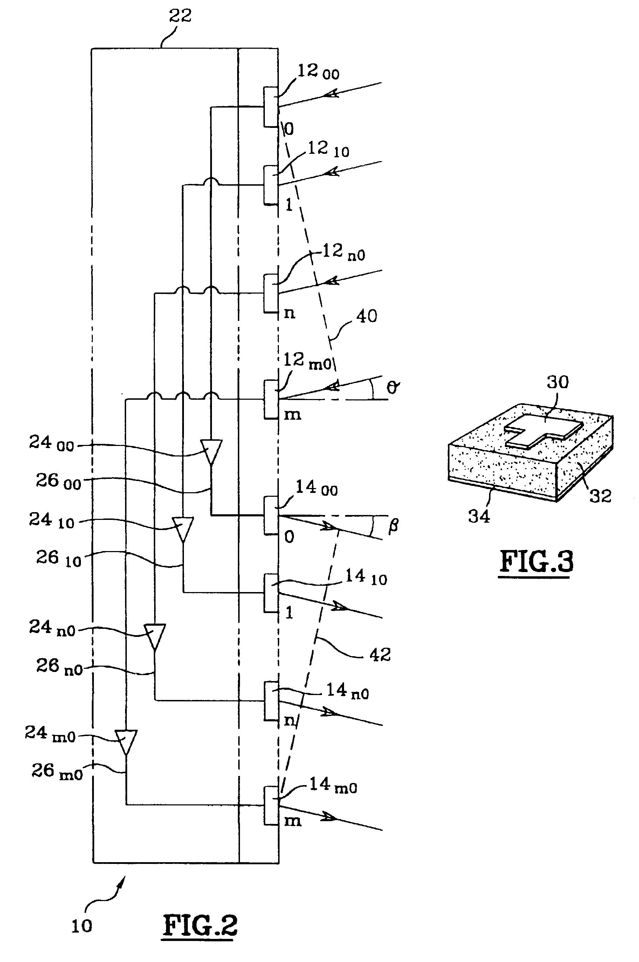

Sur les figures 1 et 2, un répéteur actif selon l'invention comprend une pluralité d'éléments radiants référencés 12 et 14 qui sont disposés sur une plaque 16 suivant une matrice rectangulaire en rangées numérotées de 0 à m et en colonnes numérotées de 0 à k, chaque élément radiant étant répertorié par la référence 12 ou 14 affectée d'un indice à deux chiffres dont le premier chiffre indique la rangée et le deuxième chiffre indique la colonne.

Chaque élément radiant 12 ou 14 est connu et est par exemple décrit dans la publication intitulée "ELECTRONIC & ELECTRICAL ENGINEERING RESEARCH STUDIES" édité en 1981 par JOHN WILEY & SONS LTD. et plus particulièrement le chapitre intitulé " Flat Radiating Dipolar and Applications to Arrays" du Professeur G. DUBOST.

La figure 3 représente un exemple de réalisation d'un tel élément radiant qui comprend une couche métallique 30 en forme de T disposée sur un substrat 32. Le côté du substrat 32 opposé à celui recevant la couche métallique 30 est métallisé pour réaliser un plan de masse 34.

Les éléments radiants 12 sont groupés pour former un premier réseau matriciel 18 de m rangées et k colonnes occupant la partie supérieure de la plaque 16 tandis que les éléments radiants 14 sont groupés pour former un deuxième réseau matriciel 20 de m rangées et k colonnes occupant la partie inférieure de la plaque 16.

Les éléments radiants de la même colonne de chaque réseau sont connectés entre eux selon le schéma de la figure 2 qui correspond à la première colonne. Ainsi, les éléments radiants $12_{00}$, $12_{10}$ ...$12_{no}$ ··· $12_{mo}$ sont connectés

respectivement aux éléments radiants $14_{00}$, $14_{10}$ ... $14_{no}$ ... $14_{mo}$ par des voies d'amplification $22_{00}$, $22_{10}$ ... $22_{no}$ ... $22_{mo}$ comprenant chacune respectivement un amplificateur $24_{00}$, $24_{10}$ ... $24_{no}$ ... $24_{mo}$ et un trajet $26_{00}$, $26_{10}$ ... $26_{no}$ ... $26_{mo}$.

Si le déphasage $\Phi$ introduit par chaque couple amplificateur/trajet est le même, on peut montrer qu'une onde 40 reçue par le réseau 18 selon un angle d'incidence $\Theta$ est ré-émis selon une onde 42 ayant un angle d'incidence $\beta$ tel que $\Theta = \beta$, ce qui signifie que l'antenne 16 se comporte comme un miroir réfléchissant.

En effet, si les éléments radiants 12 et 14 sont identiques et omnidirectifs et que les gains des amplificateurs 24 sont identiques, à distance lointaine de l'antenne 16 dans la direction $\beta$, le champ ré-émis $E(\beta)$ selon une colonne peut s'écrire sous la forme

$$E(\beta) = \sum_{n=0}^{m} e^{i(2\pi/\delta+\Phi)[nd \sin \Theta +(m-n)d \sin \beta]}$$

formule dans laquelle $\delta$ est la longueur d'onde et d est la distance qui sépare deux éléments radiants consécutifs sur une colonne. Par ailleurs, cette formule ne prend pas en compte les gains des amplificateurs car il est identique pour chacun et n'intervient donc que pour un facteur constant.

Le module du champ est donné par :

$$|E(\beta)| = \left| e^{i(2\pi/\delta+\Phi)m\,d\,\sin\,\beta} \right| \cdot \left| \sum e^{i(2\pi/\delta+\Phi)n\,d\,(\sin\,\Theta-\sin\,\beta)} \right|$$

c'est-à-dire le produit d'un premier terme qui est déterminé par les caractéristiques m et d de l'antenne et d'un deuxième terme qui résulte d'une sommation dont le résultat dépend de la différence ($\sin \Theta$ - $\sin \beta$).

Ce deuxième terme est maximum lorsque $\Theta = \beta$, ce qui signifie que le champ ré-émis est maximum lorsque $\Theta = \beta$, ce qui correspond à un effet miroir réalisé par l'antenne 16.

Afin d'éviter une instabilité du système due à la présence des amplificateurs 24, le gain de chaque amplificateur doit être inférieur au découplage entre les éléments radiants associés, $12_{00}$ et $14_{00}$ par exemple, ce qui signifie que leur distance d'éloignement doit être calculé en conséquence.

**Revendications**

1. Répéteur actif pour système de transmission, caractérisé en ce qu'il comprend:

   - une antenne (16) constituée d'une pluralité d'éléments radiants juxtaposés (12,14), qui sont groupés en deux réseaux matriciels identiques séparés (18,20),
   - des voies d'amplification pour connecter chaque élément radiant d'un réseau à un élément radiant du deuxième réseau à la même position matricielle selon un gain et un déphasage identiques pour chaque voie d'amplification de sorte que l'onde reçue (40) par le premier réseau (18) suivant un angle d'incidence $\Theta$ est ré-émis par le deuxième réseau (20) suivant une onde (42) d'angle d'incidence $\beta$ tel que $\Theta = \beta$.

2. Répéteur selon la revendication 1, caractérisé en ce que chaque voie d'amplification comprend un amplificateur et un trajet, le couple amplificateur/trajet définissant un déphasage déterminé.

3. Répéteur selon la revendication 1 ou 2, caractérisé en ce que le gain de chaque amplificateur est inférieur à l'isolation entre les deux éléments radiants qui sont connectés par la voie d'amplification concernée.

4. Répéteur selon l'une des revendications 1 à 3, caractérisé en ce que chaque élément radiant est omnidirectif.

5. Répéteur selon l'une des revendications 1 à 4, caractérisé en ce que chaque élément radiant est du type utilisé dans les antennes plates.

$12_{00}$　　　$12_{01}$　　　　　　　　　　　　$12_{0k}$　16

$12_{10}$　　　$12_{11}$　　　　　　　　　　　　$12_{1k}$

　　　　　　　　　　　　　　−18−

$12_{n0}$　　　$12_{n1}$　　　　　　　　　　　　$12_{nk}$

$12_{m0}$　　　$12_{m1}$　　　　　　　　　　　　$12_{mk}$

$14_{00}$　　　$14_{01}$　　　　　　　　　　　　$14_{0k}$

$14_{10}$　　　$14_{11}$　　　　　　　　　　　　$14_{1k}$

　　　　　　　　　　　　　　−20−

$14_{n0}$　　　$14_{n1}$　　　　　　　　　　　　$14_{nk}$

$14_{m0}$　　　$14_{m1}$　　　　　　　　　　　　$14_{mk}$

**FIG.1**

**FIG.2**

**FIG.3**

Office européen
des brevets

**RAPPORT DE RECHERCHE EUROPEENNE**

Numéro de la demande

EP 98 40 1907

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 280 297 A (PROFERA JR CHARLES E) 18 janvier 1994 * abrégé * * colonne 3, ligne 8-20 * * colonne 3, ligne 30-42 * * colonne 3, ligne 55-56 * * colonne 4, ligne 31-44 * * colonne 5, ligne 31-46 * * revendications 1,10 * * figures 1,4 * | 1-4 | H01Q3/46 H04B7/155 |
| A | US 5 392 152 A (HIGGINS J AIDEN ET AL) 21 février 1995 * abrégé * * colonne 1, ligne 62 - colonne 2, ligne 15 * * colonne 2, ligne 59 - colonne 3, ligne 4 * * revendication 1 * * figure 1 * | 1-4 | |
| A | EP 0 104 536 A (BALL CORP) 4 avril 1984 * abrégé * * page 2, ligne 1-21 * * page 8, ligne 22 - page 9, ligne 2 * * page 10, ligne 32 - page 11, ligne 4 * * revendication 1 * * figures 1-3,6 * | 1-4 | DOMAINES TECHNIQUES RECHERCHES (Int.Cl.6) H01Q H04B |
| A | FR 2 471 679 A (LABO ELECTRONIQUE PHYSIQUE) 19 juin 1981 * page 7, ligne 22 - page 8, ligne 19 * * page 10, ligne 4 - page 11, ligne 16 * * revendications 1,2 * * figures 1,5,6 * | 1-4 | |

Le présent rapport a été établi pour toutes les revendications

| Lieu de la recherche | Date d'achèvement de la recherche | Examinateur |
|---|---|---|
| LA HAYE | 16 octobre 1998 | Dejonghe, O |